# EUROPEAN PATENT APPLICATION

(11) **EP 0 670 116 A1**
(43) Date of publication of application: **06.09.1995**
(21) Application number: 94301604.8
(22) Date of filing: 04.03.1994
(51) Int. Cl.: A21C 11/02

(54) **A method of and apparatus for, profiling pastry dough**

(71) Applicant: RANKS HOVIS McDOUGALL PLC, Windsor Berkshire SL4 3ST (GB)
(72) Inventor: McDonnell, John Patrick, Eastleigh, Hants SO5 6HZ (GB); Chopra, Jarnail, Eastleigh, Hants SO5 3PL (GB)
(74) Representative: Walters, Frederick James

(57) **Abstract**

An apparatus and method for profiling an outer face (23) of a pastry dough top (10) on a container (8) having a foodstuff filling (9) has a die face (21) displaceable into engagement with the top face (23) to mould the top (10) on the container (8) and provide a required profile to the top face (23). The die face (21) has restricted ports (32) through which air from between the outer face (23) of the top and the die face (21) can be displaced during moulding and through which air under pressure can be directed following moulding of the top (10) at low pressure to assist in separation of the moulded top (10) from the die face (21) and also at high pressure to assist in removal of pastry particles from the die face following the aforementioned separation.

## Description

### TECHNICAL FIELD & BACKGROUND ART

The present invention relates to a method and apparatus for profiling pastry dough and is particularly concerned with the profiling of dough which is to provide a top closure for a container having a foodstuff filling, for example, in the industrial preparation of fruit, meat or vegetable pies.

In the production of food pies it is known for open topped containers, typically frusto conical metal foil cups or open topped cases of pastry dough (possibly received within the aforementioned foil cups) supported in seatings, to be charged with a predetermined volume of food filling and thereafter the container effectively closed by a lid or top in the form of a pastry dough disc which is applied to overlie the filling. It has hitherto been proposed to apply the pastry dough lid to the container as a preform in which it is moulded so that a face of the lid presents a predetermined shape or configuration (which typically is in the form of a motif or design emblematic of the foodstuff filler) and so that such face of the lid is presented outwardly of the container as it is applied thereto. Commercially, the provision of the lid with an embossed emblematic representation can enhance the aesthetic appeal of the baked or otherwise cooked product. By one prior proposal the preformed lid is applied to the container as a close fit within the periphery of the container particularly where the latter is in the form of a pastry dough case, so that as the food product is cooked, the periphery of the lid is intended to unite with the pastry of the container. In a further proposal, the pre-moulded pastry dough lid is applied so that its marginal peripheral edge overlies the periphery of the container and the lid is subjected to a crimping operation which binds the lid to the container and typically forms a serrated or other profile around the periphery of the lid.

A disadvantage of the prior proposals is that relatively complicated and expensive machinery is necessary for preforming the pastry dough tops with the required motif or other embossed configuration and subsequently locating the preformed tops accurately on the containers, usually so that a particular motif is located centrally on the container. It frequently occurs that the lid when fitted is offset from the container sufficiently to detract from the intended aesthetic appeal of the finished product. Furthermore, as the lid is applied over the foodstuff filling, difficulties can be encountered in controlling the volume of airspace which is enclosed between the filling and the top thus resulting in unacceptable variations in ratio between the volume of filling to the volume of airspace between the filling and the top following cooking and rising of the pastry dough. It is an object of the present invention to provide an apparatus for, and method of, profiling a pastry dough top for a container having a foodstuff filling and by which the disadvantages of the prior proposals as aforementioned may be alleviated.

### STATEMENT OF INVENTION & ADVANTAGES

According to the present invention there is provided apparatus for profiling an outer face of a pastry dough top on a container having a foodstuff filling comprising a die displaceable into engagement with the top outer face, the die having a face which co-operates with the top to mould the top on the container and which die face corresponds to the profile required of the top outer face and wherein a spaced array of restricted ports are provided in said die face through which gas (typically air) can be displaced from between the outer face of the top and the die face during moulding and gas (typically air) under pressure can be directed following moulding of the top to assist in separation of pastry dough from the die.

Further according to the present invention there is provided a method of profiling an outer face of a pastry dough top on a container having a foodstuff filling which comprises displacing a die into engagement with the top outer face for a face of the die to cooperate with and mould the top outer face to a required profile and during said moulding permitting gas (typically air) from between the outer face of the top and the die face to evacuate by way of a spaced array of restricted ports in said die face and subsequent to said moulding, directing gas (typically air) under pressure through said restricted ports to assist in separation of pastry dough from the die face.

By the present invention it is intended that the pastry dough top, which will usually be in the form of a closure lid, has its outer face moulded to a predetermined profile whilst the lid is sited on the container to overlie, and preferably enclose with the container, the foodstuff filling. During such moulding of its outer face, the underside of the top will usually be supported by the underlying foodstuff filling within the container thereby effectively determining the volume of air, if any, which may be enclosed between the container and its top. From this may be determined, within acceptable limits, the space which may be formed between the top and the filling as the pastry rises during cooking to form the finished product. In the commericial production of pies similarly sized and shaped containers will be provided with the same constant volume of filling and the same tops so that it can reasonably be expected that each cooked product to have substantially the same physical characteristics. Furthermore, by moulding the outer face of the pastry dough top whilst the latter is on the container it can be ensured that the configuration of the motif or pattern on the moulding is at a predetermined position or orientation relative to the top of the container.

The provision of the restricted ports in the die face allows air (or other gas, such as nitrogen, which may be employed in the moulding region) to evacuate as the die face approaches the pastry dough top to permit the pastry dough to conform with the die face. Furthermore, following moulding of the top, air (or other gas) may be directed through the restricted ports (preferably at a pressure which is relatively low to alleviate disfiguration of the desired profile of the top) to faciliate separation between the outer face of the top and the die face. When the die face is adequately spaced from the pastry dough top, air (or other gas) at relatively high pressure may be directed through the restricted ports to ensure that those ports are clear and possibly to remove particles of pastry dough which may adhere to the die face. Desirably the ports are adequately restricted to alleviate entry therein of pastry dough during the moulding process and preferably so that their pattern is substantially indiscernible on the moulded outer face of the top (unless, of course, such pattern is intended as contributing to the required moulded profile on the outer face of the top). In a typical example the restricted ports are formed by capillary bores having a diameter in the region of 0.015 inches.

Usually the die face will have a generally concave profile to provide the outer face of the pastry dough top as moulded and baked with a generally convex profile as is conventionally preferred for pie tops. Usually the die face will include one or more discrete and sharply defined recessed regions of predetermined configuration within which part of the pastry dough of the top is received during moulding to provide a corresponding sharply defined embossed region or regions on the top outer face (typically such a sharply defined recessed region or regions will form a discrete pattern or motif on the outer face of the top) and preferably said restricted ports are located solely in the sharply defined recessed region or regions of the die face.

As previously mentioned, the container is likely to be in the form of an open topped metal foil cup or may comprise a pre-moulded open topped case of pastry dough - such a pastry dough case may be formed and located within the aforementioned metal foil cup. The pastry dough top on the container may be preformed to vary in thickness and is preferably sized so that its outer peripheral marginal region overlies a peripheral region at the top of the container so that during moulding the outer periphery of the die face pressurises and profiles the outer peripheral marginal region of the pastry dough top onto the peripheral region of the container. If required the die may have a peripheral cutter which during moulding cuts the pastry top on the container to provide a predetermined outer peripheral edge to that top and permit excess pastry dough from the top to be removed as waste.

### DRAWINGS

One embodiment of the present invention will now be described, by way of example only, with reference to the accompanying illustrative drawings in which:-
Figure 1 schematically illustrates a typical line system by which pastry dough lids are applied to close cases having a foodstuff filling;
Figure 2 is a side elevation, in part section, of a profiling station including a die to which containers with their pastry dough lids applied from Figure 1 are indexed for moulding the lid to provide a motif and pattern on the outer face thereof, and
Figure 3 is a plan view of the face of the die in Figure 2 showing a pattern and motif which may typically be formed on the outer face of the pastry dough top at the station shown in Figure 2.

### DETAILED DESCRIPTION OF DRAWINGS

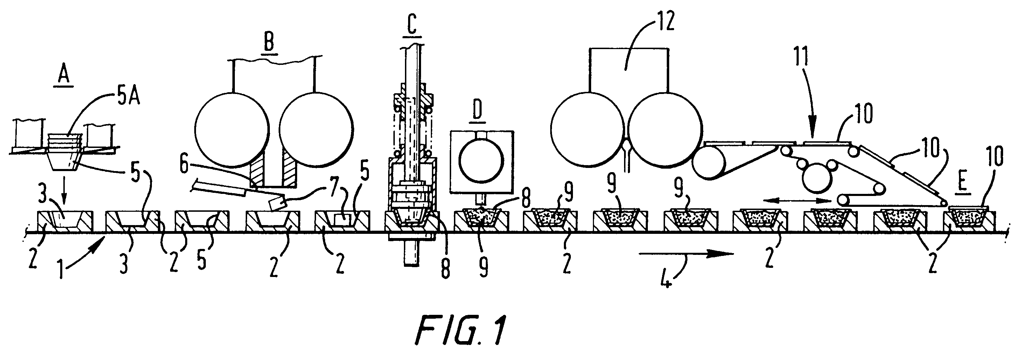

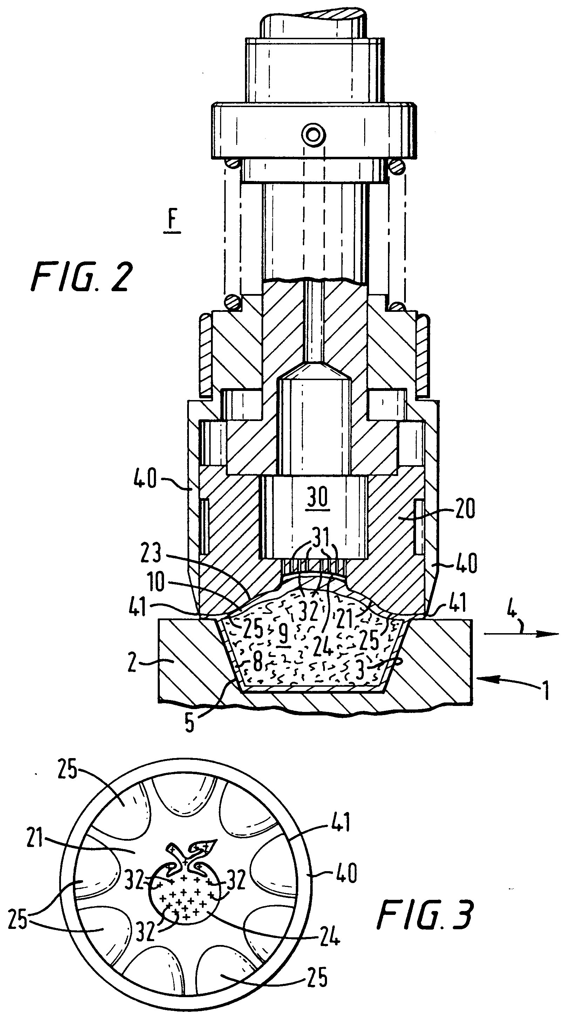

The apparatus illustrated is typically intended for the manufacture of pastry pies having a foodstuff filling such as a puree of fruit and/or chunk fruit, and comprises a pallet chain 1 by which a longitudinally spaced array of pallets 2 having open topped frusto conical seatings 3 are indexed to progress in the direction of arrow 4 sequentially through a series of stations A to F as shown in Figures 1 and 2.

At station A open topped aluminium foil cups 5 of frusto conical shape corresponding to the seatings 3 are deposited by a screw feed mechanism one in each seating 3 from a stack 5A of the cups. The pallets 2 with their cups fitted are indexed beneath station B from which pastry dough is extruded and severed by a cutter 6 for a billet 7 of the pastry to be deposited in each foil cup. The pastry billets 7 are of constant and predetermined volume and are carried by the pallets 2 to a blocking station C. At station C the billet 7 is subjected to a die pressing operation whereby the pastry within the foil cup 5 is moulded over the interior of the cup to form an open topped substantially frusto conical pastry dough case 8. The volume of the pastry billet 7 is determined so that following its pressing in the blocking station C, the pastry from the billet extends fully about the inner surface of the cup 3 to coincide with the top rim of that cup. The pastry case 8 indexes from the blocking station C to pass beneath a filling station D where it is charged with a measured quantity of fruit puree and/or chunks (in the present example for an apple pie filling) from a rotary valve depositor. The pallets 2 with their food filled cases are indexed to a lidding station E at which lids 10 in the form of circular discs of pastry dough are placed, substantially centrally, one on each pie case 3 to overlie the fruit filling 9. The lids 10 are fed to the lidding station by a conveyor belt system 11 from a lid former 12 comprising opposing die rollers between which pastry dough is extruded and cut into the shape of the disc. The lid former 12 may press the dough to provide initial profiling for the lids whereby each lid may vary in thickness over its extent - in the present example the pastry dough lids preferably have a central concentric circular region of relatively large thickness which tapers into a thinner annular peripheral region of the lid. The diameter of the disc lid may be substantially the same as or slightly larger than the diameter of the rim presented by the upper edge of the pastry case 5 so that when the lid is fitted to the pastry case it provides an overlap on the pallet 2.

The uncooked fruit pies effectively formed in the pallets 2 following fitting of the lids 10 are indexed to a profiling station F shown in Figure 2. The profiling station has a generally cylindrical die head 20 with a generally circular die face 21 that is directed downwardly for moulding the upwardly directed outer face 23 of the pie lid 10. The die face 21 will usually be coated with a low friction material (such as polytetrafluoroethylene or that sold under the Trade Mark ARMOURCOTE 15-30) to alleviate adhesion of the pastry dough thereto and is of generally concave form. The generally concave profile of the die face is provided with a discrete centrally disposed and sharply defined recessed region 24 that is shaped to represent, in the present example, the profile of an apple carrying a short stalk and small leaf. Formed about the periphery of the die face 21 are a circumferentially spaced array of generally parabolic dome-like protrusions 25 each of which may be likened to the "ball of a thumb".

The die head 20 has an air chamber 30 from which extend a spaced array of capillary bores 31 that open as a spaced array of restricted ports 32 (indicated by small crosses in Figure 3) in the recess 24 of the die face. In the present example the restricted ports 32 and their bores 31 have a diameter of substantially 0.015 inches. The chamber 30 can communicate by way of control valve means (not shown) with either atmosphere or a source of air under high or low pressure. The head 20 is capable of controlled vertical displacement, for example by a fluid pressure operated ram, for its die face 21 to advance towards or withdraw from the outer face 23 of a pie lid 10 carried by a pallet 2 positioned at the profiling station F. As the die head 20 advances towards the pie lid 10 for the purpose of profiling its outer face 23, the valve control means opens communication between the chamber 30 and atmosphere so that air can be displaced from between the die face 21 and the lid outer face 23, particularly in the recessed region 24, by way of the restricted ports 32, the capillary bores, and the chamber 30 to atmosphere so that air entrapment is alleviated and the pastry dough of the lid will be received within the die face and moulded closely to the profile presented by that face as the die head closes with the pallet 2. During this moulding operation the pastry dough of the lid may be displaced onto and be supported by the underlying pie filling 9 and the die face 21 will usually compress the marginal peripheral region of the pie lid 10 together with the pastry edge of the base pastry case 8, particularly around the outer rim of the pie, thereby sealing it. The application of further pressure by the die face 21 as it moves downwards to seal the pie lid to the pastry case also causes the pastry lid 10 to deflect upwards, as it is displaced against the pie filling 9, into the sharply defined recessed region 24 of the die where it is profiled to correspond to the design of Figure 3 and present a centrally disposed embossed motif representing an apple having a short stalk and small leaf as defined by the recessed region 24. In addition the peripherally spaced array of protrusions 25 on the die face form a circumferentially spaced array of generally parabolic hollows (which may be likened to indentations formed by the ball of a thumb) about the periphery of the pie lid. Preferably the restricted ports are so small that pastry dough from the lid is restrained from entering those ports and to the extent that any marks corresponding to the position of the restricted ports on the moulded outer face of the lid are indiscernible.

Following the moulding operation the die head 20 is withdrawn from the pie lid and at the initiation of such withdrawal the valve control means directs air under relatively low pressure into the chamber 30 and through the bores 31 into the recessed region 24 where the low pressure air assists in separating the embossed motif and possibly the lid generally from the die face. This localised air assisted separation of the pastry lid from the die face is particularly beneficial as the recessed region 24 forms an intricate sharply defined pattern on the outer face of the lid, unlike the less sharply defined undulating pattern presented by the "thumb print" design formed by the protrusions 25 where the low frictional coating on the die face 21 may be adequate to ensure separation of the pastry dough. When the die head 20 has withdrawn clear of the pie lid, possibly at the top of its stroke, the valve control means directs air under high pressure into the chamber 30 so that such air blasts through the capillary bores 31 to ensure that those bores are clear and to remove any particles of pastry dough which may adhere in the recessed region 24.

During the moulding operation of the pie lid the die face 21 will usually press the marginal peripheral region of the pie lid to merge with the rim of the pastry case 8 and preferably the die head has a cutter for trimming excess dough from the peripheral edge of the pie lid. In Figure 2 the die head 20 is located within the bore of a cylindrical cutter 40 which is axially displaceable relative to the die head and is controlled so that its cutting edge 41 is withdrawn clear of the die face during the initial moulding operation and subsequent to the lid being moulded and immediately prior to withdrawal of the die head, the cutter 40 advances so that its edge 42 trims excess pastry from the periphery of the pie lid. Following this cutting the cutter 40 will withdraw with the die head 20 to permit the uncooked pie to be indexed towards an oven for baking as a further pallet 2 is indexed into the profiling station.

In the above described embodiment it will be appreciated that at the profiling station F the outer face of the pie lid is moulded as the pie lid 10 is displaced against the fruit filling 9. Consequently as each uncooked pie is formed in substantially the same manner with substantially the same volume of filling and shape and volume of pastry, it is to be expected that when the pies are baked, the pastry lids will rise from the pie filling to form an air space which is substantially the same for all of the pies and can be determined to be of an acceptable height. Furthermore, it will be appreciated that the apple motif is representative of the fruit pie filling and that by use of other die heads suitable alternative motifs may be provided for other fruit pies or which may be characteristic of a particular pie filling, for example a snowman or Christmas trees for mince pies.

## Claims

1. Apparatus for profiling an outer face of a pastry dough top on a container having a foodstuff filling comprising a die displaceable into engagement with the top outer face, the die having a face which co-operates with the top to mould the top on the container and which die face corresponds to the profile required of the top outer face and wherein a spaced array of restricted ports are provided in said die face through which gas (typically air) can be displaced from between the outer face of the top and the die face during moulding and gas (typically air) under pressure can be directed following moulding of the top to assist in separation of pastry from the die.

2. Apparatus as claimed in claim 1 in which the die face comprises a recessed region of predetermined configuration (preferably corresponding to a discrete pattern or motif) within which part of the pastry dough of the top is received during moulding to provide a corresponding embossed region on the top outer face and said restricted ports are located in said recessed region.

3. Apparatus as claimed in either claim 1 or claim 2 and comprising means for controlling flow of gas under a selected relatively high or low pressure through said restricted ports to assist in separation of pastry dough from the die.

4. Apparatus as claimed in claim 3 in which said gas control means directs gas at relatively low pressure through the restricted ports to the outer face of the top to assist in separation of the top from the die face following moulding.

5. Apparatus as claimed in either claim 3 or claim 4 in which said gas control means directs gas at relatively high pressure through the restricted ports following separation of the top from the die face for assisting in removal of debris pastry dough which may be on the die face.

6. Apparatus as claimed in any one of the preceding claims in which the die face has an outer periphery which during moulding pressurises and profiles an outer peripheral marginal region of the top onto a peripheral region of the container.

7. Apparatus as claimed in any one of the preceding claims in which the die has an outer peripheral part which cuts the pastry dough top on the container to provide a predetermined outer peripheral edge to the pastry dough top moulded on the container.

8. Apparatus as claimed in any one of the preceding claims in which the die face has a substantially concave profile to provide the outer face of the top as moulded with a substantially convex profile.

9. Apparatus as claimed in any one of the preceding claims in which the container comprises a preform of pastry dough.

10. A method of profiling an outer face of a pastry dough top on a container having a foodstuff filling which comprises displacing a die into engagement with the top outer face for a face of the die to cooperate with and mould the top outer face to a required profile and during said moulding permitting gas (typically air) from between the outer face of the top and the die face to evacuate by way of a spaced array of restricted ports in said die face and subsequent to said moulding directing gas (typically air) under pressure through said restricted ports to assist in separation of pastry dough from the die face.

11. A method as claimed in claim 10 which comprises directing gas through said restricted ports at a relatively low pressure to assist in separation of the moulded pastry dough top from the die face.

12. A method as claimed in either claim 10 or claim 11 which comprises directing gas through said restricted ports at a relatively high pressure following separation of the moulded top from the die face for assisting in removal of debris pastry dough which may be on the die face.

13. A method as claimed in any one of claims 10 to 12 which comprises cutting the pastry dough top moulded on the container to provide a predetermined outer peripheral edge to the top.

14. A container having a foodstuff filling and a pastry dough top profiled by the method as claimed by any one of claims 10 to 13.
